# FASCICULE DE BREVET EUROPEEN

(11) **EP 2 407 952 B1**
(45) Date de publication et mention de la délivrance du brevet: **19.08.2020**
(21) Numéro de dépôt: 11173333.3
(22) Date de dépôt: 08.07.2011
(51) Int. Cl.: G08G 3/00, H04B 7/185

(54) **Système permettant d'augmenter la couverture, l'information et la robustesse des dispositifs d'identification automatique de navires**
System zur Erhöhung der Funkabdeckung, Information und der Stabilität der automatischen Identifizierungsvorrichtungen auf Schiffen
System for increasing the coverage, information and sturdiness of devices for automatic identification of ships

(30) Priorité: 13.07.2010 FR 1002952
(43) Date de publication de la demande: 18.01.2012
(73) Titulaire: Thales, 92400 Courbevoie (FR)
(72) Inventeur: Oster, Yann, 31270 FROUZIN (FR)
(74) Mandataire: Dudouit, Isabelle

(56) Documents cités:
- US-A1- 2008 086 267
- US-B2- 7 483 672

## Description

L'objet de l'invention concerne un système et un procédé pour augmenter la couverture, l'information et la robustesse des systèmes d'identification automatique, de type AIS (Automatic Identification System), équipant des navires, à destination d'utilisateurs au sol ou en mer, sans limitation géographique.

Dans la suite de la description, l'expression « contexte local » désigne un ensemble d'informations relatives à une zone locale, telles que la présence de navires, leur position et leurs caractéristiques propres. L'expression « contexte local AIS » désigne l'information de contexte local obtenue avec un récepteur AIS, dans un rayon qui correspond à la portée très haute fréquence ou VHF (abréviation anglo-saxonne de Very High Frequency). L'expression « contexte étendu » désigne l'information de contexte augmentée en termes de portée, de contenu et de fiabilité. Le contenu peut être augmenté avec, par exemple, des informations relatives à des objets non coopérant au sens AIS, tels que d'autres navires ou des dangers pour la navigation : containers ou plus généralement des objets à la dérive.

Une cellule AIS correspond à une zone où les communications AIS d'un ensemble de transpondeurs AIS, embarqués sur des navires ou des stations côtières, sont auto-organisées et dans la limite de la portée VHF.

L'expression « couverture globale et dynamique» est employée pour définir un ensemble de cellules AIS qui sont fédérées par le système selon l'invention à l'aide de navires dits de référence et de stations côtières localisés dans les différentes cellules.

Un navire disposant d'un transpondeur de type AIS, pour échanger des informations avec les différents navires équipés de récepteur ou de transpondeur AIS, et de moyens de communication par satellite, pour échanger avec un centre de traitement, peut être activé en tant que navire de référence pour une période de temps ou époque T.

Une station sol de référence ou côtière est une station pourvue d'un transpondeur AIS, pour échanger des informations avec les différents navires équipés de récepteur ou de transpondeur AIS et situés à portée VHF, et de moyens de communications terrestres pour échanger avec un centre de traitement.

Un centre de traitement au sol va recevoir un ensemble d'informations issues de diverses sources d'information, telles que les stations côtières, les navires de référence, des stations radar, de l'imagerie par satellite, pour traiter et consolider les contextes locaux afin de produire une information de contexte étendu. L'information de contexte étendu est ensuite diffusée auxdites stations et aux navires de références. Un centre de traitement est associé à une zone ou à une couverture géographique.

Le verbe "consolider" comporte l'action de regrouper et recouper les informations collectées par les différents navires de référence, par les stations côtières, ou d'autres moyens d'observations tels que des radars ou l'imagerie par satellite, comme il sera détaillé ci-après.

L'AIS est un système d'identification automatique des navires (immatriculation MMSI, position, cap, vitesse, ..) qui se trouvent en visibilité directe par une liaison VHF, soit dans un rayon de 20-30 miles nautiques, qui permet d'estimer le contexte local, produisant une information plus riche que celles obtenues avec un radar. Les applications principales concernent la prévention des abordages en mer, la surveillance du trafic, l'aide à la navigation, et dans le futur les missions de recherche et secours en mer.

Des travaux et expériences menées aux USA et en Norvège, par exemple, portent sur la réception par satellite des signaux AIS émis par les navires, afin de disposer d'une information globale sur une large couverture. Cependant, la forme d'onde et le mode d'accès multiple à répartition dans le temps (organisation automatique du TDMA, pour Time Division Multiple Access) de l'AIS, conçu pour des cellules de 50 km de rayon, conduisent à de multiples interférences des signaux utiles au niveau d'un récepteur embarqué sur un satellite couvrant une large zone et recevant donc un grand nombre de signaux provenant de différentes cellules par canal AIS VHF.

Sans nécessiter de déployer de satellites spécifiques, le système proposé selon l'invention permet une couverture globale, à partir des infrastructures AIS existantes, et produit une information fiabilisée et enrichie.

Le système peut fusionner diverses sources d'informations, issues de moyens d'observation et de détection au sol ou autre embarqués sur des navires, aéronefs (avions, drones) ou satellites. Outre la couverture globale et le gain en fiabilité, cette information composite peut alors permettre d'identifier des émissions AIS erronées et des objets non coopératifs sans émetteurs AIS.

L'art antérieur décrit des solutions d'extensions connues de l'AIS.

Une première solution consiste à recevoir les signaux AIS de tous les navires présents dans une zone, à bord de satellites spécifiques. Ceci nécessite de distinguer les messages AIS émis par des navires dans différentes cellules, typiquement à l'aide d'une antenne réalisant un filtrage spatial avec une couverture cellulaire très fine. Cette première solution, à base de satellites spécifiques avec des antennes complexes, est très coûteuse.

Une deuxième solution repose sur le déploiement de stations côtières et l'agrégation des informations fournies par une couverture côtière. Cette deuxième solution en général ne couvre pas plus d'une zone située à 50 km des côtes.

Le brevet US 7483672 décrit un système de communication AIS (Automatic Identification System) comprenant des moyens de communications, plusieurs centres de traitement au sol et une ou plusieurs stations terrestres. Dans ce ce brevet, les navires ont tous un même rôle.

### Références utilisées

Ai : Zone de couverture i
Nréf: navire de référence
Nréfi : navire de référence i
Nt : navire équipé d'un transpondeur AIS
Nr : navire équipé d'un récepteur AIS
Ni : navire i
Rm : route du bateau ou du navire
Sci : station côtière i ; qui sont a priori toutes considérées comme station côtière de référence, i = 1, 2, ... N° de la station côtière,
Cti : centre de traitement
Ls : liaison satellite
Zi : cellule AIS
Mci : information consolidée pour une zone i, Mc, l'ensemble des informations consolidées Mci.

De manière générale, l'expression « station de référence » désigne aussi bien les navires de référence que les stations côtières de référence.

L'idée du système d'identification selon l'invention propose une couverture globale, étendue, sans limitation géographique. Pour cela, le système selon l'invention intègre des moyens standards de type AIS, des liaisons par satellite, des stations côtières et des centres de traitement réalisant la coordination des moyens (afin de maximiser la couverture du système dans le temps) et le traitement des données (fusion de différentes informations pour élaborer une information de contexte étendu). Il met notamment en œuvre un algorithme de planification des ressources mobilisées, afin d'optimiser la couverture en assurant un niveau donné de redondance pour les besoins de fiabilité et de réactivité du système.

L'invention concerne un procédé permettant d'augmenter la couverture d'identification automatique de système existant de type AIS, ledit procédé étant mis en œuvre dans un système comprenant les caractéristiques du système précité caractérisé en ce qu'il comporte au moins les étapes suivantes :
- définir une ou plusieurs stations côtières de référence, et un ou plusieurs navires de référence Nréfi,
- pour un centre de traitement Cti gérant une aire de couverture Ai donnée,
   ▪ pour chaque époque T ou tranche de temps d'une durée donnée:
      - récupérer et accumuler les divers contextes AIS locaux actuels (pour l'époque T considérée) détectés par les stations de référence, navires de référence Nréfi ou stations côtières de référence Sci, relevant de la zone de couverture du centre de traitement,
      - consolider l'information AIS, contexte local par contexte local, un contexte local contenant des informations relatives à une zone locale, en intégrant dans une base de données D toute nouvelle information propre auxdits navires (identification navire, position, cap, vitesse...),
   ▪ formatage pour chaque station de référence (navire de référence) Nréfi ou station côtière devant diffuser cette information :
      - pour un rayon de visibilité configuré, formater une base de données spécifique Mci reprenant les informations des objets de la base de données de contexte global contenant des informations relatives à des objets AIS ou non identifiés, dans un rayon donné relativement à la position du navire de référence Nréfi ou de la station côtière prévue pour la diffusion,
- transmission desdites informations formatées Mci vers le ou lesdits navires de référence Nréfi ou lesdites stations côtières de référence, par des liaisons satellitaires Ls ou par des moyens de communication terrestre Ri,
- diffusion des informations de contexte global vers des utilisateurs sol en utilisant des moyens de communication terrestre Ri,

Pour un navire de référence Nréfi,
- collecte du contexte AIS local et transmission au centre de traitement Cti par liaison satellitaire Ls,
- diffusion du contexte étendu contenant des informations relatives à des objets AIS ou non identifiés par canal de type AIS vers les navires ou les objets équipés d'un récepteur de type AIS situés dans une cellule définie par la portée VHF, Pour une station côtière de référence Sci,
- collecte du contexte AIS local et transmission au centre de traitement Cti par moyen de communication terrestre Ri,
- diffusion du contexte étendu par canal de type AIS vers les navires ou les objets équipés d'un récepteur de type AIS situés dans une cellule définie par la portée VHF.

L'objet de l'invention concerne aussi un système pour augmenter la couverture d'identification automatique de système existant de type Automatic Identification System ou AIS, ledit système comportant en combinaison au moins les éléments suivants :
des moyens de communications permettant l'échange d'informations entre les différents éléments constituant ledit système,
- un ou plusieurs centres de traitement au sol Cti) comprenant :
   - des interfaces de communication I_{I}, I_{Sat}, pour l'échange d'informations avec différents utilisateurs,
   - un ensemble de processeurs P adaptés pour fusionner des informations de différents types,
   - une ou plusieurs bases de données D,
   - une mémoire M pour le stockage des informations en vue de leur traitement,
- une ou plusieurs stations côtières Sci en liaison avec un ou plusieurs centres de traitement Cti par des moyens de communication Ri, permettant un échange d'informations,
- des navires Nt, Nr pourvus au moins de moyens de réception d'informations
caractérisé en ce que ledit système est adapté à mettre en œuvre le procédé selon et comporte :
- des moyens pour définir un ou plusieurs navires élus navire de référence Nrefi et/ou une ou plusieurs stations côtières de référence par le centre de traitement gérant la zone où se trouve le navire Cti pour une période de temps T donnée, lesdits navires de référence Nréfi communiquant avec les centres de traitement Cti par lesdits moyens satellites Ls, S et avec des navires à portée VHF,
- des interfaces de communication I, Isat d'un ou plusieurs centres de traitement au sol Cti pour l'échange d'informations avec différents utilisateurs, permettant la réception d'informations en provenance de navires de référence Nréfi et des stations côtières Sci, et pour la diffusion d'informations consolidées et étendues Mci après traitement vers lesdits navires de référence Nréfi et des stations côtières Sci.

Un centre de traitement Cti peut comporter une ou plusieurs interfaces I_{G} pour recevoir des données géo-référencées d'observation/détection, et ledit ensemble de processeurs P est adapté pour agréger les données en provenance de différents navires de référence et de stations côtières avec des données géo-référencées.

D'autres caractéristiques et avantages du dispositif selon l'invention apparaîtront mieux à la lecture de la description d'un exemple de réalisation donné à titre illustratif et nullement limitatif annexé des figures qui représentent :
- La figure 1, un exemple de répartition des cellules pour plusieurs navires suivant une route maritime prédéfinie,
- La figure 2, le séquencement des opérations mises en œuvre dans le cas du système comprenant des navires de référence et des centres de traitement, et
- La figure 3, un exemple de séquencement des opérations exécutées dans le cas d'une station côtière jouant un rôle de référence pour des navires à portée VHF.

Afin de bien faire comprendre le principe mis en œuvre dans le système AIS étendu selon l'invention, l'exemple qui suit va être donné dans le cadre de plusieurs navires appartenant, par exemple, à différentes cellules AIS, une cellule Zi étant définie par la limite de portée de communication VHF entre les navires. Le système donné à titre d'exemple va comporter des navires équipés de transpondeurs AIS, des navires configurés en tant que navires de référence pour une période de temps donnée, des stations côtières, des centres de traitement.

Le système AIS ou tout autre dispositif fonctionnant sur le principe de l'AIS gère de manière automatique l'allocation du canal de communication (slot temporel TDMA et canal fréquentiel) entre les différents transpondeurs. Ainsi, le système selon l'invention va pouvoir acquérir différentes informations correspondant à un ensemble de contextes locaux, la synthèse ou consolidation s'effectuera au niveau des centres de traitement.

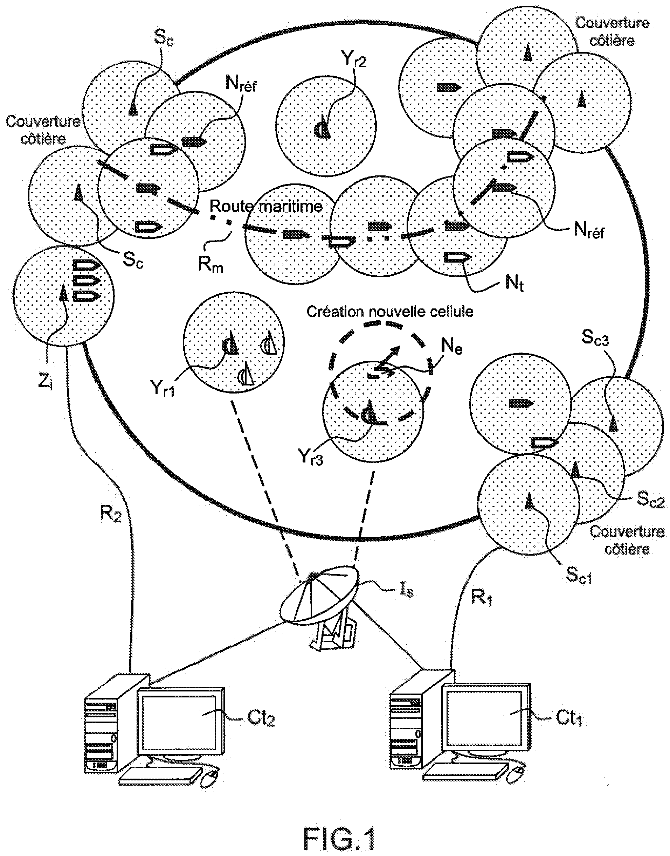

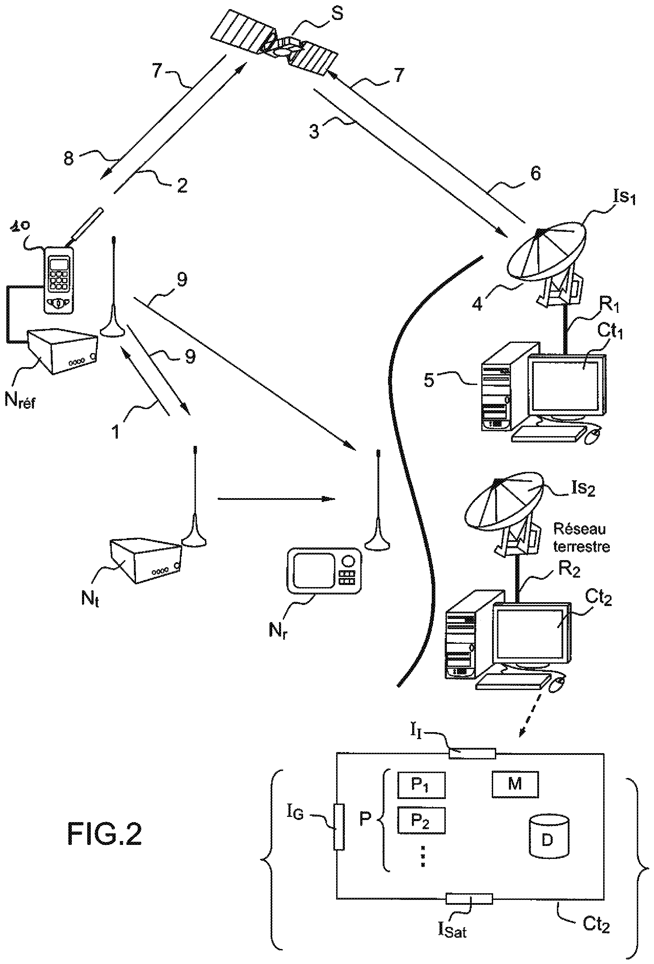

La figure 1 illustre pour une époque donnée (tranche de temps définie) :
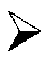 une route maritime spécifique Rₘ empruntée par un ensemble de navires, Ni. Dans cet ensemble de navires, certains vont être désignés dynamiquement, pour une période de temps T, comme navire de référence Nréfi,
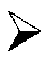 plusieurs stations de référence côtières Sci,
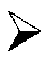 trois yachts Yri, par exemple isolés, déclarés aussi comme navires de référence Nréf,
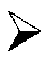 un navire Ne sortant d'une cellule selon un cap et une vitesse, qui va être déclaré comme navire de référence pour une époque ultérieure afin d'étendre la couverture globale. On utilise, par exemple, des informations contenues dans une base de données regroupant pour une identité Idnav d'un navire, sa route de navigation Rnav, afin de définir les tranches de temps T ou période pour lesquelles ce navire peut être configuré comme navire de référence (par le centre de traitement gérant la zone où se trouve le navire). Lorsque le navire ne suit pas une route prédéfinie, il est possible d'utiliser des données de cap et de vitesse pour prédire sa route à court terme. Pour servir de référence, ce navire comporte nécessairement une liaison de communication par satellite,
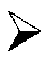 plusieurs centres de traitement au sol Cti, un centre de traitement au sol Cti gérant une zone Zi donnée, une zone Zi étant par exemple représentée sur la figure 1 par l'ellipse en gras, un centre comprenant, par exemple, comme détaillé à la figure 2, les éléments suivants :
   - des moyens de communication notamment des interfaces Iₛₐₜ permettant la mise en œuvre de liaisons par satellite pour recevoir les informations en provenance des navires de référence Nréfi, et pour rediffuser les informations consolidées et étendues Mci après traitement par le centre vers les navires de référence Nréfi,
   - des moyens de communication terrestre Ri pour recevoir les informations en provenance des stations côtières de référence Sci, et pour rediffuser les informations consolidées et étendues Mci après traitement vers ces stations de référence,
   - une ou plusieurs interfaces I_{G} pour recevoir des données géo-référencées d'observation/détection par des moyens externes tels que des radars, de l'imagerie, ou encore des systèmes de localisation (type GPS), non représentés sur la figure pour des raisons de simplification,
   - des interfaces de type Internet I_{I} (figure 2) par exemple, pour l'échange d'informations vers différents utilisateurs (par exemple, contrôle...),
   - un ensemble de processeurs Pi, P₁, P₂, adaptés pour fusionner les informations de types différents et éventuellement pour agréger les données des différents contextes AIS locaux provenant de tous les navires à portée AIS des navires de référence ou des stations côtières, avec d'autres données, par exemple, des données géo-référencées,
   - une ou plusieurs bases de données D,
   - une mémoire M pour le stockage des informations en vue de leur traitement qui est en liaison avec les processeurs.

Le système de moyens de communication par satellite, dans cet exemple, est situé en dehors des centres de traitements et il est composé d'un terminal 10 disposé au niveau d'un navire de référence N_{réf}, du satellite S et de stations satellites au sol I_{S}, de la liaison par satellite Ls représentée sur la figure 2 par les flèches 7, 8.

Sans sortir du cadre de l'invention, le terminal 10 pourrait être intégré dans l'électronique de l'AIS, et les stations satellitaires dans les centres de traitement Cti.

Chacun des navires Ni est équipé d'un terminal AIS jouant un rôle d'émetteur et de récepteur, certains de ces navires disposant d'une liaison numérique par satellite. Le débit de transmission est par exemple de 9600 bauds ou plus, les deux fréquences VHF fréquemment utilisées étant 161.975 MHz (canal maritime 87B) et 162.025 MHz (canal maritime 88B), qui sont réservées pour cette application.

Un transpondeur AIS comporte un émetteur et un ou plusieurs récepteurs. Le nombre des récepteurs est par exemple choisi selon la redondance souhaitée pour le système afin d'éviter une perte (collision de messages) d'informations provenant de navires. Le terminal AIS comporte aussi un système de positionnement par satellite, un écran de contrôle. Un transpondeur AIS embarqué sur un navire est interfacé avec les instruments du bord, tels que le compas, l'indicateur de changement de cap, etc.

Certains navires Nr peuvent être équipés uniquement d'un récepteur AIS. Ils ne peuvent pas signaler leur position par voie AIS, mais peuvent bénéficier de l'information de contexte étendu qui est diffusée par un navire de référence ou une station de référence en portée VHF.

Tout navire équipé d'une liaison par satellite Ls et d'un transpondeur AIS peut être configuré comme navire de référence Nréf. Il transmet le contexte AIS localement détecté avec le récepteur AIS (identification et position des navires munis d'un transpondeur AIS et présents dans la zone), et éventuellement des informations complémentaires (pistes radar, message texte localisant des objets localisés, des dangers tels que des containers à la dérive), via une liaison satellite Ls à destination d'un centre de traitement au sol Cti qui gère la zone dans laquelle se trouve le navire pour traiter ces informations. Les informations transmises peuvent contenir les informations suivantes : le numéro identifiant le navire, le statut de navigation, la route, la vitesse du navire, la vitesse de changement de cap, la position longitude et latitude, le cap vrai, etc. (collecte de la cellule AIS locale).

Après traitement au sol des différentes sources d'information, l'information de contexte global et étendu Mci (relatif à une station de référence) peut être diffusée par un navire de référence Nréfi ou une station côtière Sci par la voie AIS, depuis un transpondeur AIS .

Le système (navires, stations sols et les centres de traitement) comporte des liaisons satellites permettant notamment la communication entre les navires de référence et les centres de traitement, et des liaisons de type réseau de communication terrestre entre les stations sols de référence ou stations côtières de référence et les centres de traitement.

Le contexte global peut comporter les informations de type AIS, ainsi que des informations géo-référencées relatives des objets non identifiés, des dangers localisés, etc.

### Fonctionnement du système selon l'invention

Le système va choisir et planifier plusieurs navires de références Nréfi, ainsi que des stations sol de référence ou stations côtières Sci, parmi l'ensemble des navires équipés de moyens de communication par satellite et parmi l'ensemble des stations côtières à terre, selon le besoin de couverture, compte tenu de la position connue des navires, de leur route et de leur planning de déplacement. La route et le planning des navires professionnels et commerciaux sont généralement prédéfinis et peuvent être stockés dans une base de données.

Les centres de traitement Cti peuvent être coordonnés, par exemple de deux façons, pour se partager la charge des traitements par zones géographiques.

Dans un premier mode de coordination des centres de traitement, dit mode centralisé, un centre particulier principal Ctp orchestre dynamiquement le partitionnement de la couverture et l'allocation aires Ai ou zone de service d'un centre de traitement à gérer par l'ensemble des centres de traitement selon leurs disponibilités et leurs puissances de calcul. Pour assurer la fiabilité du système, ce centre principal peut être redondé afin de détecter et pallier des défaillances éventuelles.

Dans un second mode de coordination, dit mode auto-organisé, chaque centre de traitement Cti détermine l'ensemble des centres de traitement actifs avec leurs capacités de traitement respectives, et se coordonne avec les autres centres de traitement pour partitionner la zone de couverture et allouer un secteur ou zone Ai par centre de traitement.

Quel que soit le mode de coordination des centres de traitement pour partager la zone de couverture et le traitement des données correspondant, l'information identifiant Id(Cti, Ai) quel centre Cti gère quelle zone géographique Ai, doit être transmise aux navires de référence Nréf et aux stations côtières de référence. Ces navires et stations de référence peuvent alors transmettre les informations des contextes AIS locaux collectés au(x) centre(s) de traitement correspondant à leur zone respective Ai.

Le déplacement des navires les conduit à croiser des navires de référence Nréfi, qui sont en portée radio VHF, correspondant à environ 50km.

Tout navire Ni muni d'un transpondeur AIS nouvellement détecté par un navire de référence Nréfi ou une station côtière peut servir de station de référence, s'il dispose des moyens de communication par satellite, afin d'augmenter la couverture géographique, la fiabilité et la réactivité du système.

La couverture du système se développe ainsi dynamiquement avec les déplacements des navires susceptibles d'être configurés comme navires de référence Nréf.

Initialement, en l'absence de navire de référence, la couverture est définie par l'association des couvertures élémentaires des stations côtières Sci. La détection et l'activation de navires de référence permet d'étendre la couverture.

Un navire Nt, muni d'un transpondeur AIS et d'une liaison par satellite, qui ne détecte pas d'autre station de référence dans son périmètre AIS local, peut se déclarer auprès d'un centre de traitement Cti pour être configuré comme navire de référence Nréf afin d'augmenter la couverture globale du système, c'est-à-dire permettre un relayage (acquisition du contexte local et rediffusion du contexte étendu) des informations dans un périmètre plus important que celui défini habituellement par la portée AIS.

Les navires Nr équipés de simples récepteurs AIS standards reçoivent l'information de contexte global consolidé Mci par canal AIS, qui est diffusée par les stations de référence, à savoir soit les navires de référence Nréfi, soit les stations sol de référence Sci.

Pour des utilisateurs en mer, l'information de contexte étendu Mci pour une zone Zi est dérivée de l'information de contexte global Mc, en se limitant à un certain périmètre autour de la station de référence concernée, afin que le débit d'information étendue soit compatible du débit disponible sur le canal AIS.

L'information de contexte global Mc peut être diffusée partiellement par zone ou dans son intégrité à des utilisateurs au sol, par des moyens réseau Ri, de type terrestre ou autre.

La figure 2 illustre un exemple de séquencement pour les échanges d'information entre un navire de référence Nréf et un centre de traitement Ct₁ dans un système comprenant des navires Nt avec transpondeur AIS (émetteur/récepteur), un navire Nr avec simple récepteur AIS, et deux centres de traitement Ct₁, Ct₂.

Un navire de référence Nréf communique avec les centres de traitement via une liaison satellite Ls et des moyens sols Is₁ (station sol de communications par satellite) qui peuvent être communs à plusieurs centres de traitement.

Le séquencement des opérations mises en œuvre au sein du système selon l'invention peut être, dans le cas d'un échange entre un navire de référence et un centre de traitement, le suivant :
1 - les transpondeurs (émetteur/récepteur) AIS équipant des navires Nt diffusent leurs informations AIS, au sein de la cellule AIS Zi avec laquelle ils sont à portée VHF, afin d'établir un contexte local à une cellule AIS,
2, 3, 4 -les navires de référence Nréfi localisés dans cette cellule Zi reçoivent ces messages AIS, et transmettent ce contexte local par liaison satellite Ls, via un satellite S vers les centres de traitement Ct₁, Ct₂ via les modules interfaces Isat, et un réseau de communication terrestre Rj les liaisons satellites mettent en oeuvre par exemple des terminaux et systèmes Inmarsat ou Thuraya,
5 - tous les contextes locaux correspondant à différentes cellules AIS sont fusionnés au niveau des centres de traitement, Ct₁, Ct₂, éventuellement avec d'autres sources d'informations (radar, imagerie), au moyen d'un ou plusieurs processeurs Pi équipant les centres de traitement Ct₁, Ct₂, etc.,
6, 7 - l'information consolidée Mci au niveau d'un centre de traitement Ct, est renvoyée via la liaison satellite Ls vers un navire de référence Nréf chargé de la diffuser localement,
8 - l'information de contexte consolidée Mci reçue par les navires de référence, Nréf, est diffusée localement, 9, par canal AIS vers tous types de terminaux AIS en portée VHF.

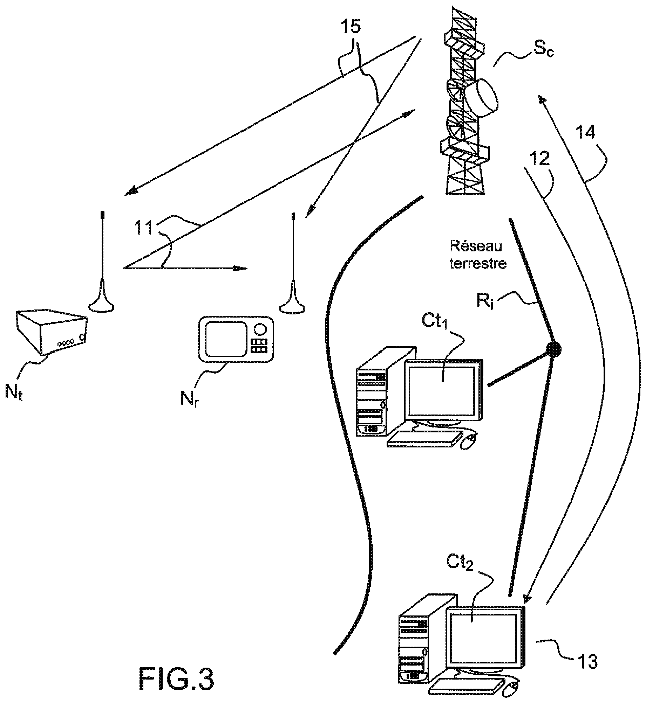

La figure 3 schématise le séquencement des échanges avec une station côtière Sci qui joue le rôle de station de référence :
11- les transpondeurs AIS des navires Nt diffusent leurs informations AIS, permettant d'établir le contexte local à une cellule AIS,
12 - la ou les stations côtières de référence Sci reçoivent l'ensemble des messages AIS, transmettent ce contexte local par réseau terrestre R, au centre de traitement correspondant Ct₂ c'est-à-dire au centre de traitement qui gère la zone dont relève la station,
13 - les contextes locaux provenant des cellules AIS sont fusionnés dans les centres de traitement au moyen de processeurs avec d'autres sources d'informations comme il a été évoqué précédemment,
14 - l'information consolidée Mci est renvoyée par réseau terrestre du centre de traitement à la station côtière de référence,
15 - la station côtière de référence diffuse l'information consolidée localement par canal AIS, vers tous types de terminaux AIS en portée VHF.

### Autres variantes

Selon un mode de réalisation, permettant une meilleure fiabilité et réactivité du système, le système peut allouer le statut de « station de référence » à un ensemble de navires co-localisés, c'est-à-dire disposés dans une même cellule AIS Zi délimitée par une portée radio donnée.

La diffusion répétitive de l'information de contexte global consolidé par voie AIS peut être réalisée par un seul de ces navires co-localisés ou par un ensemble de ces navires en utilisant un mode d'accès partagé tel que le TDMA qui permet une alternance temporelle par un ensemble de ces navires.

Selon un mode de mise en œuvre de l'invention, le système permet de détecter des incohérences dans les informations transmises, ou encore une défaillance dans le fonctionnement des communications pour un navire donné.

Par exemple, en prenant le cas de deux navires de référence : un navire A et un navire B qui sont en portée VHF, dans une même cellule, le centre de traitement qui gère la zone ou cellule dans laquelle se trouvent les navires peut décider que le navire A va surveiller les informations Mci (informations relatives à la zone dérivées du contexte global) émises par le navire B. Le centre de traitement transmet les mêmes informations consolidées Mci vers les deux navires A et B. Si A est configuré pour surveiller les informations émises par B, il va surveiller les informations consolidées que B diffuse via la voie AIS aux navires à portée VHF. A cet effet, le terminal du navire A met en œuvre des moyens (logiciel ou matériel) permettant de déterminer l'identité du navire B et le contenu des informations que B diffuse.Ceci s'applique de la même façon aux stations cotières.

Une station de référence mettant en œuvre des moyens de traitement et des algorithmes de traitement, peut ainsi surveiller la bonne diffusion de l'information par une station ou un autre navire de référence. Une station ou un navire de référence peut alors être configuré, au choix pour :
- Collecter le contexte AIS local,
- Diffuser l'information globale consolidée après traitement au sol,
- Vérifier la diffusion correcte de l'information globale par un autre navire/station de référence.

Selon une autre mise en œuvre de l'invention, le système permet aussi de vérifier la cohérence des informations AIS transmises par un navire. Par exemple, lorsqu'un navire diffuse un message AIS comportant une information de position erronée, le système peut détecter que cette position n'est pas la bonne, lorsque cette position ne relève pas géographiquement de la cellule AIS Zi du navire ou de la station de référence ayant capté le message AIS, ou encore lorsque le message AIS n'a pas été capté par une station ou un navire de référence proche de la position en question.

Selon une autre mise en œuvre de l'invention, le système permet aussi de vérifier le bon fonctionnement du transpondeur AIS de chaque navire. Un navire équipé d'un transpondeur AIS actif doit apparaître avec sa position, au sein du contexte étendu, qui est diffusé par une station ou un navire de référence. Le terminal AIS peut donc vérifier la cohérence entre la position GPS connue à bord et la position du navire obtenue de l'information de contexte consolidé. Un dysfonctionnement du transpondeur AIS est ainsi détectable.

Selon une autre mise en œuvre de l'invention, les messages AIS des navires détectés par le système peuvent être exploités pour faciliter et améliorer l'acquisition d'autres messages AIS captés par un récepteur embarqué sur un aéronef ou un satellite, en générant une réplique des messages AIS connus pour la soustraire du signal reçu selon la technique connue de Signal Cancelling. Les émissions AIS des navires détectés par le système sont entièrement connues, à la fois en terme de contenu, de timing et d'origine géographique des messages. Le traitement du signal AIS reçu depuis un aéronef ou un satellite consiste à soustraire virtuellement les émissions AIS connues, pour réduire le nombre de signaux interférents. Ce traitement peut être réalisé localement à bord ou au sol.

### Algorithme de traitement des données pour générer le contexte global :

Pour un centre de traitement Cti gérant une zone donnée Zi (locale, régionale, nationale, continentale...), l'algorithme de traitement va exécuter les étapes suivantes :
▪ pour chaque époque T (tranche de temps d'une certaine durée : 1-3 minutes, par exemple) :
   - rechercher et accumuler (mémorisation dans le temps pour une même station de référence) les divers contextes AIS locaux actuels (pour l'époque T considérée) détectés par les stations de références, navires de référence Nréfi ou stations côtières de référence Sci, relevant de la zone de couverture du centre de traitement,
   - consolider ou faire la synthèse de l'information AIS, contexte local par contexte local, en intégrant dans une base de données D toute nouvelle information (identification navire, position, cap, vitesse...),
   - éventuellement, fusionner cette information AIS globale avec les données complémentaires disponibles (radar, observation optique, messages texte sur la localisation de dangers nouveaux...),
▪ une étape de formatage pour chaque station de référence (navire de référence Nréfi ou stations côtières Sci) devant diffuser cette information :
   ▪ pour un rayon de visibilité configuré, formater une base de données spécifique Mci reprenant les informations des objets de la base de données de contexte global Mc, en se limitant aux navires et objets localisés dans un rayon donné relativement à la position de la station de référence Nréfi ou Sci prévu pour la diffusion.

Une fois le contexte global généré, le procédé va mettre en œuvre les étapes suivantes :
- une étape de transmission desdites informations formatées Mci vers la ou lesdites stations de référence Nréfi ou Sci, par des liaisons satellitaires Ls ou par des moyens de communication terrestre Ri,
- une étape de diffusion des informations de contexte global vers des utilisateurs sol en utilisant des moyens de communication terrestre Ri,
   Pour un navire de référence Nréfi,
   - la collecte du contexte AIS local et transmission au centre de traitement Cti par liaison satellitaire Ls,
   - la diffusion du contexte étendu Mci par canal de type AIS vers les navires ou les objets équipés d'un récepteur de type AIS situés dans une cellule définie par la portée VHF,
      Pour une station côtière de référence Sci,
   - la collecte du contexte AIS local et transmission au centre de traitement Cti par moyen de communication terrestre Ri,
   - la diffusion du contexte étendu Mci par canal de type AIS vers les navires ou les objets équipés d'un récepteur de type AIS situés dans une cellule définie par la portée VHF.

L'horizon de prévision du mouvement pour un navire est très variable.

Les navires professionnels ou marchands respectent des horaires de départ et d'arrivée, et suivent des routes prédéfinies. Leur déplacement est donc prévisible à long terme. Le signalement d'un retard ou d'un changement de route et/ou de vitesse permet aussi de corriger la prévision à long terme.

En revanche, un navire de pêche est plus libre de ses déplacements. Un bateau de plaisance est encore plus évolutif, et son horizon de prévision est réduit à quelques heures au mieux.

Pour chaque époque, la couverture est définie par l'association des couvertures cellulaires AIS correspondant à l'ensemble des stations de référence (navires ou stations côtières) sélectionnées.

### Algorithme de planification des navires/stations de référence :

Pour un centre de traitement Cti gérant une aire donnée Ai ou couverture donnée (locale, régionale, nationale, continentale...)

### Initialisation :

- initialisation par déclaration des stations côtières Sci comme stations de référence

### Boucle, au rythme époque T :

- projection des positions des navires recensés par le système :
   ∘ pour chaque navire,
   ▪ pour chaque époque future T+dt, à concurrence de l'horizon de prévision pour le navire
   - projeter la position, vitesse et cap, compte tenu de l'information disponible (prévision date heure de départ, d'arrivée, route, dernier signalement)
- détermination des navires éligibles Néli:
   ∘ pour chaque époque future T+dt
   ▪ pour chaque navire disposant des moyens cités précédemment permettant d'être utilisé comme navire de référence Nréf,
   - si le navire (trajectoire projetée) sort de la cellule associée AIS Zi ou couverture définie pour l'époque T, alors il est éligible a priori
- sélection des navires de référence Nréfi:
   ∘ itérer, pour le niveau de redondance souhaité
   ▪ pour chaque époque future T+dt
   - pour chaque navire éligible,
      ∘ rechercher si d'autres navires éligibles sont en voisinage immédiat (en portée AIS/VHF), et sélectionner le meilleur selon un critère fixé au préalable choisi parmi la liste suivante: navire commercial, tarification, route, limitation des changements de configuration (activation navire de référence) par navire
      ∘ retirer le navire sélectionné de la liste des navires éligibles
   - actualiser la définition de la couverture
- résiliation des navires de référence Nréfi:
   ∘ pour chaque époque future T+dt
   ▪ pour chaque navire de référence Nréfi,
      - rechercher si d'autres navires ou stations côtières de référence Sci sont en voisinage immédiat (en portée AIS/VHF), et identifier les N meilleurs (selon divers critères : navire commercial, tarification, route, limitation des changements de configuration par navire ...), N définissant le niveau de redondance souhaité
      - retirer les navires non sélectionnés de la liste des navires de référence
   ▪ actualiser la définition de la couverture

L'algorithme est applicable indifféremment pour planifier les stations de référence (navires ou stations côtières) servant :
- à collecter l'information AIS locale, et à rediffuser l'information de contexte global consolidé
- à seulement collecter l'information AIS locale
- à seulement rediffuser l'information de contexte global consolidé
- à vérifier la diffusion correcte de l'information de contexte global consolidé, par un autre navire/station de référence.

Les navires commerciaux dont les routes de navigation sont planifiées, sont implicitement privilégiés pour servir de station de référence, du fait de leur horizon de prévision étendu.

Le système selon l'invention présente notamment les avantages suivants :
- il permet d'élargir la couverture de collecte et de diffusion d'informations sans limitation géographique, donc d'avoir une couverture globale,
- il permet d'améliorer la fiabilité et la réactivité de détection,
- il offre une gestion automatique et dynamique de l'allocation des stations de référence (navires ou stations côtières), pour optimiser la couverture et le niveau de redondance pour la fiabilité et la réactivité du système,
- le contenu de l'information est augmenté en portée et en nature, avec la détection d'objets non coopératifs ou passifs relativement au système AIS,
- il permet de diffuser des informations géo-localisées utiles pour la navigation et la sécurité, comme la météo locale, les conditions de mer ou des dangers non répertoriés sur les cartes,
- il utilise des moyens existants déjà déployés dans les systèmes opérationnels (AIS, liaisons satellites), sans risque de saturation de ces moyens,
- à tout moment, un utilisateur d'un terminal AIS peut commuter entre un mode AIS standard et un mode AIS étendu, si l'information synthétique est marquée comme tel,
- il permet la diffusion par voie AIS d'une information de contexte étendu/augmenté à destination de navires non nécessairement équipés de liaison par satellite.
- la surveillance de rediffusion permet de détecter une défaillance occasionnelle ou durable d'un navire configuré en station de référence. Le système peut alors lui retirer le statut de référence (jusqu'à nouvel ordre), et planifier de nouvelles ressources.
- tout navire muni d'un transpondeur AIS peut vérifier le fonctionnement de son transpondeur, relativement à son GPS et à l'information de contexte étendu,
- le système peut faciliter la réception de signaux AIS acquis à bord d'un satellite ou d'un aéronef, affectée par un grand nombre de messages AIS interférents, en fournissant l'information précise sur l'ensemble des messages AIS émis par les navires gérés par le système, pour étendre encore la couverture (navires hors de la couverture du système, et sans liaison par satellite).

## Revendications

1. Procédé permettant d'augmenter la couverture d'Identification automatique de système existant de type AIS, **caractérisé en ce qu'**il comporte au moins les étapes suivantes :
• définir une ou plusieurs stations côtières de référence, et un ou plusieurs navires de référence Nréfi,
• pour un centre de traitement Cti gérant une aire de converture Ai donnée,
▪ pour chaque époque T ou tranche de temps d'une durée donnée:
• rechercher et accumuler les divers contextes AIS locaux actuels, pour l'époque T considérée détectés par les stations de référence, navires de référence Nréfi ou stations côtières de référence, relevant de la zone de couverture du centre de traitement,
• consolider l'information AIS, contexte local par contexte local, un contexte local contenant des informations relatives à une zone locale, en intégrant dans une base de données D toute nouvelle information propre auxdits navires (identification navire, position, cap, vitesse...),
▪ formatage pour chaque station de référence (navire de référence Nréfi ou station côtière de référence) devant diffuser cette information :
• pour un rayon de visibilité configuré, formater une base de données spécifique Mci reprenant les informations des objets de la base de données de contexte global contenant des informations relatives à des objets AIS ou non identifiés, dans un rayon donné relativement à la position du navire de référence Nréfi ou de la station côtière de référence prévue pour la diffusion,
• transmission desdites informations formatées Mci vers le ou lesdits navires de référence Nréfi ou lesdites stations côtières de référence, par des liaisons satellitaires Ls ou par des moyens de communication terrestre Ri,
• diffusion des informations de contexte global vers des utilisateurs sol en utilisant des moyens de communication terrestre Ri,
Pour un navire de référence Nréfi,
• collecte du contexte AIS local et transmission au centre de traitement Cti par liaison satellitaire Ls,
• diffusion du contexte étendu contenant des informations de contexte augmentée en termes de portée, de contenu et de fiabilité par canal de type AIS vers les navires ou les objets équipés d'un récepteur de type AIS situés dans une cellule définie par la portée VHF,
Pour une station côtière de référence Sci,
• collecte du contexte AIS local et transmission au centre de traitement Cti par moyen de communication terrestre Ri,
• diffusion du contexte étendu par canal de type AIS vers les navires ou les objets équipés d'un récepteur de type AIS situés dans une cellule définie par la portée VHF.

2. Procédé selon la revendication 1 **caractérisé en ce qu'**au niveau d'un centre de traitement Cti, on fusionne l'information AIS globale avec des données complémentaires disponibles (radar, observation optique, messages texte sur la localisation de dangers nouveaux...) et **en ce que** les stations de référence, stations côtières Sci ou navire de référence Nréfi associées à une cellule AIS rediffusent l'information consolidée Mci.

3. Procédé selon la revendication 2 **caractérisé en ce que** l'information consolidée comprend des informations géolocalisées sur les conditions météo et l'état de la mer.

4. Procédé selon la revendication 1 **caractérisé en ce que** pour un centre de traitement Cti gérant une zone Zi ou une couverture donnée, le procédé exécute l'algorithme de planification des stations de référence suivant :
• initialisation par déclaration des stations côtières comme stations de référence,
Boucle, à un rythme époque T :
• projection des positions des navires gérées par le système :
∘ pour chaque navire,
▪ pour chaque époque future T+dt, à concurrence de l'horizon de prévision pour le navire
• projeter la position, vitesse et cap, compte tenu de l'information disponible (prévision date heure de départ, d'arrivée, route, dernier signalement)
• détermination des navires éligibles :
∘ pour chaque époque future T+dt
▪ pour chaque navire disposant des moyens cités précédemment permettant d'être utilisé comme navire station de référence,
• si le navire (trajectoire projetée) sort de la zone ou couverture définie pour l'époque, alors il est éligible a priori
• sélection des navires de référence Nréfi :
∘ itérer, pour le niveau de redondance souhaité
▪ pour chaque époque future
• pour chaque navire éligible,
∘ rechercher si d'autres navires éligibles sont en voisinage immédiat (en portée AIS/VHF), et sélectionner le meilleur (selon divers critères : navire commercial, tarification, route, limitation des changements de configuration par navire ...)
∘ retirer le navire sélectionné de la liste des navires éligibles
• actualiser la définition de la couverture
• résiliation des navires de référence :
∘ pour chaque époque future
▪ pour chaque navire de référence Nréfi,
• rechercher si d'autres navires ou stations côtières de référence sont en voisinage immédiat (en portée AIS/VHF), et identifier les N meilleurs navires ou stations côtières de référence (selon divers critères : navire commercial, tarification, route, limitation des changements de configuration par navire ...), N définissant le niveau de redondance souhaité
• retirer les navires non sélectionnés de la liste des navires de référence
▪ actualiser la définition de la couverture.

5. Procédé selon la revendication 4 pour planifier les stations côtières de référence et/ou les navires de référence Nréfi destinées comportant les étapes suivantes:
• à collecter l'information AIS locale, et à rediffuser l'information de contexte global consolidé,
• à seulement collecter l'information AIS locale,
• à seulement rediffuser l'information de contexte global consolidé,
• à vérifier la diffusion correcte de l'information de contexte global consolidé, par une autre station de référence.

6. Procédé selon la revendication 1 pour détecter des incohérences dans les informations transmises, ou encore une défaillance dans le fonctionnement des communications pour un navire donné **caractérisé en ce qu'**il comporte au moins les étapes suivantes :
• soient deux navires A et B qui sont en portée VHF, dans une même cellule,
• le centre de traitement Cti qui gère la zone ou cellule dans laquelle se trouvent les navires, décide que le navire A va surveiller les informations (informations relatives à la zone dérivées du contexte global) émises par le navire B,
• le centre de traitement Cti transmet les mêmes informations consolidées Mci vers les deux navires A et B,
• si A est configuré pour surveiller les informations émises par B, il va surveiller les informations consolidées que B diffuse via la voie AIS aux navires à portée VHF, le terminal du navire A mettant en œuvre des moyens (logiciel ou matériel) permettant de déterminer l'identité du navire B et le contenu des informations que B diffuse.

7. Procédé selon la revendication 1 pour vérifier la cohérence des informations AIS transmises par un navire, ledit procédé étant **caractérisé en ce que** lorsqu'un navire diffuse un message AIS comportant une information de position erronée, le système détecte que cette position n'est pas la bonne, lorsque cette position ne relève pas géographiquement de la cellule AIS, Zi du navire ou de la station de référence ayant capté le message AIS, ou encore lorsque le message AIS n'a pas été capté par une station ou un navire de référence proche de la position déclarée.

8. Système pour augmenter la couverture d'identification automatique de système existant de type Automatic Identification System ou AIS, ledit système comportant en combinaison au moins les éléments suivants :
des moyens de communications (10, S, I_{S1}, I_{S2}, Ri) permettant l'échange d'informations entre les différents éléments constituant ledit système,
• un ou plusieurs centres de traitement au sol Cti comprenant :
• des interfaces de communication (I_{I}, I_{Sat}), pour l'échange d'informations avec différents utilisateurs,
• un ensemble de processeurs P adaptés pour fusionner des informations de différents types,
• une ou plusieurs bases de données D,
• une mémoire M pour le stockage des informations en vue de leur traitement,
• une ou plusieurs stations côtières Sci en liaison avec un ou plusieurs centres de traitement Cti par des moyens de communication Ri, permettant un échange d'informations,
• des navires Nt, Nr pourvus au moins de moyens de réception d'informations
**caractérisé en ce que** ledit système est adapté à mettre en œuvre le procédé selon l'une des revendications 1 à 7 et **en ce qu'**il comporte :
• des moyens pour définir un ou plusieurs navires élus navire de référence Nrefi et/ou une ou plusieurs stations côtières de référence par le centre de traitement Cti gérant la zone où se trouve le navire pour une période de temps T donnée, lesdits navires de référence Nréfi communiquant avec les centres de traitement Cti par lesdits moyens satellites (Ls, S) et avec des navires à portée VHF,
• des interfaces de communication (I,.. Isat) d'un ou plusieurs centres de traitement au sol Cti pour l'échange d'informations avec différents utilisateurs, permettant la réception d'informations en provenance de navires de référence Nréfi et des stations côtières Sci, et pour la diffusion d'informations consolidées et étendues Mci après traitement vers lesdits navires de référence Nréfi et des stations côtières Sci.

9. Système selon la revendication 8 **caractérisé en ce qu'**un centre de traitement Cti comporte une ou plusieurs interfaces I_{G} pour recevoir des données géo-référencées d'observation/détection, et **en ce que** ledit ensemble de processeurs P est adapté pour agréger les données en provenance de différents navires de référence et de stations côtières avec des données géo-référencées.

10. Système selon la revendication 8 **caractérisé en ce qu'**un centre de traitement Cti comprend : une base de données permettant de stocker des informations propres à l'identification d'un navire, choisies parmi la liste suivante : sa position, son cap, sa vitesse de déplacement, sa vitesse de changement de cap, sa route, la date et l'heure prévue de départ, la date et l'heure prévue d'arrivée ; une base de données comprenant des informations issues de radar, d'observation optique.

## Patentansprüche

1. Verfahren, das die Erhöhung der automatischen Identifikationsabdeckung eines bestehenden Systems des AIS-Typs zulässt,
**dadurch gekennzeichnet, dass** es die folgenden Schritte beinhaltet:
• Definieren einer oder mehrerer Referenzküstenstationen und eines oder mehrerer Referenzschiffe Nrefi,
• für ein Verarbeitungszentrum Cti, das ein gegebenes Abdeckungsgebiet Ai verwaltet,
▪ für jede(s) Periode T oder Zeitfenster einer bestimmten Dauer:
• Suchen und Akkumulieren der verschiedenen aktuellen lokalen AIS-Kontexte für die von den Referenzstationen, Referenzschiffen Nrefi oder Referenzküstenstationen erkannte Periode T, die für die Abdeckungszone des Verarbeitungszentrums relevant ist,
• Konsolidieren der AIS-Informationen, jeweils nach lokalem Kontext, wobei ein lokaler Kontext Informationen in Bezug auf eine lokale Zone enthält, durch Integrieren aller für die Schiffe spezifischen neuen Informationen (Schiffsidentifikation, Position, Kurs, Geschwindigkeit usw.) in einer Datenbank D,
▪ Formatierung für jede Referenzstation (Referenzschiff Nrefi oder Referenzküstenstation), die diese Informationen verbreiten muss:
• Formatieren, für einen konfigurierten Sichtbarkeitsradius, einer spezifischen Datenbank Mci mit den Informationen der Objekte der globalen Kontextdatenbank mit Informationen über AIS- oder nicht identifizierte Objekte in einem gegebenen Radius relativ zur Position des Referenzschiffs Nrefi oder der zur Verbreitung vorgesehenen Referenzküstenstation,
• Übertragen der formatierten Informationen Mci an das oder die Referenzschiff(e) Nrefi oder die Referenzküstenstationen durch Satellitenverbindungen Ls oder durch terrestrische Kommunikationsmittel Ri,
• Verbreiten globaler Kontextinformationen an Landbenutzer mittels terrestrischer Kommunikationsmittel Ri,
für ein Referenzschiff Nrefi
• Erfassen des lokalen AIS-Kontexts und Übertragen desselben an das Verarbeitungszentrum Cti über die Satellitenverbindung Ls,
• Verbreiten des erweiterten Kontexts mit erhöhten Kontextinformationen in Bezug auf Reichweite, Inhalt und Zuverlässigkeit pro Kanal vom AIS-Typ an mit einem Empfänger des AIS-Typs ausgestattete Schiffe oder Objekte, die sich in einer durch den VHF-Bereich definierten Zelle befinden,
für eine Referenzküstenstation Sci
• Erfassen des lokalen AIS-Kontexts und Übertragen desselben an das Verarbeitungszentrum Cti über terrestrische Kommunikationsmittel Ri,
• Verbreiten des erweiterten Kontexts durch einen Kanal des AIS-Typs an mit einem AIS-Empfänger ausgestattete Schiffe oder Objekte, die sich in einer durch den VHF-Bereich definierten Zelle befinden.

2. Verfahren nach Anspruch 1, **dadurch gekennzeichnet, dass** an einem Verarbeitungszentrum Cti globale AIS-Informationen mit verfügbaren ergänzenden Daten (Radar, optische Beobachtung, Textmeldungen zur Lokalisierung neuer Gefahren usw.) zusammengeführt werden, und dadurch, dass die mit einer AIS-Zelle assoziierten Referenzstationen, Küstenstationen Sci oder Referenzschiffen Nrefi die konsolidierten Informationen Mci wieder verbreiten.

3. Verfahren nach Anspruch 2, **dadurch gekennzeichnet, dass** die konsolidierten Informationen geolokalisierte Informationen über Wetter- und Seebedingungen umfassen.

4. Verfahren nach Anspruch 1, **dadurch gekennzeichnet, dass** für ein Verarbeitungszentrum Cti, das eine gegebene Zone Zi oder Abdeckung verwaltet, das Verfahren den folgenden Referenzstationsplanungsalgorithmus ausführt:
• Initialisieren, durch Deklaration von Küstenstationen als Referenzstationen, einer Schleife in einem Periodenrhytmus T:
• Projizieren der Positionen der von dem System verwalteten Schiffe:
∘ für jedes Schiff,
▪ für jede zukünftige Periode T+dt, bis zum Prognosehorizont für das Schiff:
• Projizieren von Position, Geschwindigkeit und Kurs unter Berücksichtigung verfügbarer Informationenen (voraussichtliche(s) Datum/Uhrzeit von Abfahrt, Ankunft, Route, letzter Bericht)
• Bestimmen der in Frage kommenden Schiffe:
∘ für jede zukünftige Periode T+dt
▪ für jedes Schiff, das über die oben genannten Mittel verfügt, um als Referenzstationsschiff eingesetzt zu werden,
• wenn das Schiff (projizierte Bahn) die für die Periode definierte Zone oder Abdeckung verlässt, dann kommt es a priori in Frage
• die Auswahl von Referenzschiffen Nrefi:
∘ Wiederholen, für den gewünschten Redundanzgrad
▪ für jede zukünftige Periode
• für jedes in Frage kommende Schiff,
∘ Suchen, ob sich andere in Frage kommende Schiffe in unmittelbarer Nähe (im AIS/VHF-Bereich) befinden, und Auswählen des Besten (gemäß verschiedenen Kriterien: Handelsschiff, Tarifierung, Route, Begrenzung der Konfigurationsänderungen pro Schiff usw.)
∘ Streichen des gewählten Schiffs aus der Liste der in Frage kommenden Schiffe
• Aktualisieren der Definition der Abdeckung
• Aufheben der Referenzschiffe:
∘ für jede zukünftige Dauer
▪ für jedes Referenzschiff Nrefi,
• Suchen, ob andere Referenzschiffe oder -küstenstationen in unmittelbarer Nähe (AIS/VHF-Bereich) sind, und Identifizieren der N besten Referenzschiffe oder -küstenstationen (gemäß verschiedenen Kriterien: Handelsschiff, Tarifierung, Route, Begrenzung der Konfigurationsänderungen pro Schiff usw.), wobei N den gewünschten Redundanzgrad definiert
• Streichen nicht ausgewählter Schiffe aus der Liste der Referenzschiffe
▪ Aktualisieren der Definition der Abdeckung.

5. Verfahren nach Anspruch 4 zum Planen der bestimmten Referenzküstenstationen und/oder Referenzschiffe Nrefi, das die folgenden Schritte beinhaltet:
• Erfassen lokaler AIS-Informationen und Wiederverbreiten der konsolidierten globalen AIS-Kontextinformationen,
• Erfassen nur lokaler AIS-Informationen,
• Wiederverbreiten der konsolidierten globalen Kontextinformationen,
• Überprüfen der korrekten Verbreitung der konsolidierten globalen Kontextinformationen durch eine weitere Referenzstation.

6. Verfahren nach Anspruch 1 zum Erkennen von Inkohärenzen in den übertragenen Informationen oder eines Fehlers im Kommunikationsbetrieb für ein gegebenes Schiff, **dadurch gekennzeichnet, dass** es die folgenden Schritte beinhaltet:
• entweder zwei Schiffe A und B, die im VHF-Bereich sind, in derselben Zelle,
• Entscheiden, durch das Verarbeitungszentrum Cti, das die Zone oder Zelle verwaltet, in der sich die Schiffe finden, dass Schiff A die von Schiff B ausgesendeten Informationen (Informationen in Bezug auf die vom globalen Kontext abgeleiteten Informationen) überwachen wird,
• Übertragen, durch das Verarbeitungszentrum Cti, derselben konsolidierten Informationen an die beiden Schiffe A und B,
• Überwachen durch A, wenn A zum Überwachen der von B ausgesendeten Informationen konfiguriert ist, der konsolidierten Informationen, die B über den AIS-Kanal zu den Schiffen im VHF-Bereich verbreitet, wobei das Terminal von Schiff A Mittel (Software oder Hardware) zur Bestimmung der Identität von Schiff B und des Inhalts der von B verbreiteten Informationen einsetzt.

7. Verfahren nach Anspruch 1 zur Überprüfung der Kohärenz von von einem Schiff übertragenen AIS-Information, wobei das Verfahren **dadurch gekennzeichnet ist, dass**, wenn ein Schiff eine AIS-Nachricht verbreitet, die eine fehlerhafte Positionsinformation enthält, das System erkennt, dass diese Position nicht richtig ist, wenn diese Position geographisch nicht innerhalb der AIS-Zelle Zi des Schiffs oder der Referenzstation, die die AIS-Nachricht empfangen hat, liegt oder wenn die AIS-Meldung nicht von einer/m Referenzstation oder -schiff in der Nähe der angegebenen Position empfangen wurde.

8. System zum Erhöhen der automatischen Identifikationsabdeckung eines bestehenden Systems des Typs Automatic Identification System oder AIS, wobei das System in Kombination mindestens die folgenden Elemente umfasst:
Kommunikationsmittel (10, S, 1ₛ₁, 1ₛ₂, Ri), die den Informationsaustausch zwischen den verschiedenen das System bildenden Elementen ermöglichen,
• ein oder mehrere Bodenverarbeitungszentren Cti, die Folgendes umfassen:
• Kommunikationsschnittstellen (1_{I}, 1_{Sat}) zum Austauschen von Informationen mit verschiedenen Benutzern,
• einen Satz von Prozessoren P, ausgelegt zum Zusammenführen von Informationen verschiedener Typen,
• eine oder mehrere Datenbanken D,
• einen Speicher M zum Speichern von Informationen im Hinblick auf ihre Verarbeitung,
• eine oder mehrere Küstenstationen Sci in Verbindung mit einem oder mehreren Verarbeitungszentren Cti durch Kommunikationsmittel Ri, die einen Informationsaustausch zulassen,
• Schiffe Nt, Nr, wenigstens versehen mit Informationsempfangsmitteln,
**dadurch gekennzeichnet, dass** das System zum Durchführen des Verfahrens nach einem der Ansprüche 1 bis 7 ausgelegt ist, und dadurch, dass es Folgendes umfasst:
• Mittel zum Definieren eines oder mehrerer als Referenzschiff Nrefi gewählter Schiffe oder einer oder mehrerer Referenzküstenstationen durch das Verarbeitungszentrum Cti, das die Zone verwaltet, in der sich das Schiff für eine gegebene Zeitperiode T befindet, wobei die Referenzschiffe Nrefi mit den Verarbeitungszentren Cti über die Satellitenmittel (Ls, S) und mit Schiffen im VHF-Bereich kommunizieren,
• Kommunikationsschnittstellen (I, ... Isat) eines oder mehrerer Bodenverarbeitungszentren Cti für den Austausch von Informationen mit verschiedenen Benutzern, so dass Informationen von Referenzschiffen Nrefi und Küstenstationen Sci empfangen werden können, und für die Verbreitung konsolidierter und erweiterter Informationen Mci nach der Verarbeitung an die Referenz schiffe Nrefi und Küstenstationen Sci.

9. System nach Anspruch 8, **dadurch gekennzeichnet, dass** ein Verarbeitungszentrum Sci eine oder mehrere Schnittstellen I_{G} zum Empfangen von georeferenzierten Beobachtungs-/Erkennungsdaten aufweist, und dadurch, dass der Satz von Prozessoren P so ausgelegt ist, dass er die von verschiedenen Referenzschiffen und Küstenstationen mit georeferenzierten Daten zu einer einzigen IG-Schnittstelle aggregiert.

10. System nach Anspruch 8, **dadurch gekennzeichnet, dass** ein Verarbeitungszentrum Cti Folgendes umfasst: eine Datenbank zum Speichern von spezifischen Informationen zur Identifizierung eines Schiffes, ausgewählt aus der folgenden Liste: Position, Kurs, Fahrgeschwindigkeit, Kursänderungsgeschwindigkeit, Route, voraussichtliche(s) Abfahrtsdatum und -uhrzeit, voraussichtliche(s) Ankunftsdatum und -uhrzeit; eine Datenbank mit Informationen von einem optischen Beobachtungsradar.

## Claims

1. Method for augmenting the automatic identification coverage of an existing AIS-type system,
**characterised in that** it comprises at least the following steps:
• defining one or more reference coastal stations, and one or more reference ships Nrefi,
• for a processing centre Cti controlling a given coverage area Ai,
▪ for each time period T or time slot of a given duration:
• retrieving and accumulating the various current local AIS contexts, for the time period T concerned, detected by the reference stations, reference ships Nrefi or reference coastal stations, coming under the coverage area of the processing centre,
• consolidating the AIS information, local context by local context, a local context containing information on a local zone, by incorporating in a database D any new information specific to said ships (ship identification, position, heading, speed, etc.),
▪ formatting for each reference station (reference ship Nrefi or reference coastal station) having to broadcast this information:
• for a configured visibility radius, formatting a specific database Mci taking the information on objects in the global context database containing information on AIS or non identified objects, within a given radius relative to the position of the reference ship Nrefi or the reference coastal station scheduled for the broadcast,
• transmitting of said formatted information Mci to said reference ship or ships Nrefi or said reference coastal stations, via satellite links Ls or via terrestrial communication means Ri,
• broadcasting of the global context information to users on land by using terrestrial communication means Ri,
For a reference ship Nrefi,
• collection of the local AIS context and transmission to the processing centre Cti via satellite link Ls,
• broadcasting of the extended context containing context information augmented in terms of range, content and liability via AIS-type channel to the ships or the objects equipped with an AIS-type receiver located within a cell defined by the VHF range,
For a reference coastal station Sci,
• collection of the local AIS context and transmission to the processing centre Cti via terrestrial communication means Ri,
• broadcasting of the extended context via AIS-type channel to the ships or the objects equipped with an AIS-type receiver located within a cell defined by the VHF range.

2. Method according to claim 1, **characterized in that**, in a processing centre Cti, the global AIS information is merged with available complementary data (radar, optical observation, text messages concerning the location of new hazards, etc.) and **in that** the reference stations, coastal stations Sci or reference ship Nrefi associated with an AIS cell broadcast the consolidated information Mci.

3. Method according to claim 2, **characterized in that** the consolidated information comprises geolocated information on the weather conditions and sea conditions.

4. Method according to claim 1, **characterized in that**, for a processing centre Cti controlling an area Ai or a given coverage, the method executes the following scheduling algorithm for the reference stations:
• initialisation by declaration of the coastal stations as reference stations, loop, at a time period T rate:
• projection of the position of the ships managed by the system:
∘ for each ship,
▪ for each future time period T+dt, up to the prediction horizon for the ship
• projecting the position, speed and heading, given the available information (predicted date and time of departure, of arrival, route, last signalling)
• determination of the eligible ships:
∘ for each future time period T+dt
▪ for each ship having the means mentioned previously enabling it to be used as reference station ship,
• if the ship (projected trajectory) departs from the area or coverage defined for the time period, then it is *a priori* eligible
• selection of the reference ships Nrefi:
∘ iterating, for the desired redundancy level
▪ for each future time period
• for each eligible ship,
∘ searching to see if other eligible ships are in the immediate vicinity (in AIS/VHF range), and selecting the best (according to various criteria: commercial ship, pricing, course, limitation on changes of configuration for each ship, etc.)
∘ removing the selected ship from the list of eligible ships
• updating the definition of the coverage
• withdrawing the reference ships:
∘ for each future time period
▪ for each reference ship Nrefi,
• searching to see if other ships or reference coastal stations are in the immediate vicinity (in AIS/VHF range), and identifying the N best ships or reference coastal stations (according to various criteria: commercial ship, pricing, route, limitation on changes of configuration for each ship, etc.), N defining the desired redundancy level
• removing the unselected ships from the list of reference ships
▪ updating the definition of the coverage.

5. Method according to claim 4 for scheduling the reference coastal stations and/or the reference ships Nrefi intended, comprising the following steps:
• to collect the local AIS information, and to broadcast the consolidated global context information,
• to solely collect the local AIS information,
• to solely rebroadcast the consolidated global context information,
• to check the correct broadcasting of the consolidated global context information, by another reference station.

6. Method according to claim 1 for detecting inconsistencies in the transmitted information, or else failure in the operation of the communications for a given ship, **characterized in that** it comprises at least the following steps:
• take two ships A and B which are in VHF range, within one and the same cell,
• the processing centre Cti which controls the area or cell within which the ships are located decides that the ship A will monitor the information (information relating to the area derived from the global context) transmitted by the ship B,
• the processing centre Cti transmits the same consolidated information Mci to the two ships A and B,
• if A is configured to monitor the information transmitted by B, it will monitor the consolidated information that B broadcasts via the AIS channel to the ships in VHF range, the terminal of the ship A implementing means (software or hardware) for determining the identity of the ship B and the content of the information that B broadcasts.

7. Method according to claim 1 for checking the consistency of the AIS information transmitted by a ship, said method being **characterized in that**, when a ship broadcasts an AIS message containing incorrect position information, the system detects that the position is not correct, when this position does not geographically come under the AIS cell, Zi of the ship or of the reference station having picked up the AIS message, or even when the AIS message has not been picked up by a station or a reference ship close to the declared position.

8. System for augmenting the automatic identification range of an existing Automatic Identification System or AIS-type system, said system comprising in combination at least the following elements:
communication means (10, S, I_{S1}, I_{S2}, Ri) allowing exchange of information between the different elements constituting the system,
• one or more land-based processing centres Cti comprising:
• communication interfaces (I_{I}, I_{Sat}), for the exchange of information with different users,
• a set of processors P configured to merge information of different types,
• one or more databases D,
• a memory M for storing information with a view to its processing,
• one or more coastal stations Sci linked with one or more processing centres Cti by communication means Ri, allowing for an exchange of information,
• ships Nt, Nr provided at least with means for receiving information
**characterized in that** said system is adapted to implement the method according to one of claims 1 to 7 and **in that** it comprises:
• means for defining one or more ships elected as reference ships Nrefi and/or one or more reference coastal stations by the processing centre Cti managing the zone where the ship is for a given time period T, said reference ships Nrefi communicating with the processing centres Cti by satellite means (Ls, S), and with ships in VHF range,
• communication interfaces (I,.. Isat) of one or more land-based processing centres Cti for the exchange of information with various users, allowing for the reception of information from reference ships Nrefi and the coastal stations Sci, and for the broadcasting of consolidated and extended information Mci after processing to said reference ships Nrefi and coastal stations Sci.

9. System according to claim 8, **characterized in that** a processing centre Cti has one or more interfaces I_{G} for receiving geo-referenced observation/detection data, and **in that** said set of processors P is configured to aggregate the data from different reference ships and from coastal stations with geo-referenced data.

10. System according to claim 8, **characterized in that** a processing centre Cti comprises: a database for storing information specifically for identifying a ship, chosen from the following list: its position, its heading, its speed, its rate of turn, its route, the scheduled departure date and time, the scheduled arrival date and time; a database comprising information from radar and optical observations.
